# FASCICULE DE BREVET EUROPEEN

(11) **EP 0 593 643 B1**
(45) Date de publication et mention de la délivrance du brevet: **08.03.1995**
(21) Numéro de dépôt: 92915512.5
(22) Date de dépôt: 07.07.1992
(51) Int. Cl.: G01T 1/20, G01T 3/00, G01T 3/06

(54) **PROCEDE ET APPAREIL DE DETECTION SIMULTANEE ET SELECTIVE DE NEUTRONS ET DE PHOTONS X OU GAMMA**
VERFAHREN UND VORRICHTUNG ZUR FESTSTELLUNG DER SIMULTANEN UND SELEKTIVEN NEUTRONEN UND X- ODER GAMMA PHOTONS
PROCESS AND APPARATUS FOR THE SIMULTANEOUS SELECTIVE DETECTION OF NEUTRONS AND X OR GAMMA PHOTONS

(30) Priorité: 08.07.1991 FR 9108542
(43) Date de publication de la demande: 27.04.1994
(73) Titulaire: COMMISSARIAT A L'ENERGIE ATOMIQUE, 75015 Paris (FR)
(72) Inventeur: DANIEL, Georges, F-91120 Palaiseau (FR); MARIENBACH, Edouard, F-77300 Fontainebleau (FR); SZABO, Jean-Louis, F-93170 Bagnolet (FR)
(74) Mandataire: Dubois-Chabert, Guy
(86) Numéro de dépôt international: FR9200647
(87) Numéro de publication internationale: WO9301507

(56) Documents cités:
- US-A- 2 994 769
- US-A- 3 566 118
- US-A- 3 988 586
- US-A- 4 829 185
- US-H- 590

## Description

L'invention se rapporte au domaine de la détection simultanée et sélective de flux de neutrons et de photons X ou gamma, en particulier pour la diagraphie nucléaire et les mesures de taux de combustion sur les assemblages combustibles irradiés.

La détection de neutrons en présence d'un flux important de photons gamma a toujours été difficile. L'un des procédés utilisés dans l'art antérieur consiste à employer des détecteurs tels que compteurs proportionnels au ¹⁰BF₃, ³He, intrinsèquement perturbés par de forts débits de doses X ou gamma, et à les entourer d'un blindage efficace vis-à-vis de ces rayonnements. Un autre procédé consiste à utiliser des chambres à fission insensibles à ces rayonnements mais dont l'efficacité pour les neutrons est faible.

Il est souvent nécessaire de détecter simultanément les émissions de neutrons et de photons X ou gamma issues d'une source de radiations. Ceci est généralement accompli dans l'art antérieur en utilisant deux détecteurs, l'un pour les neutrons, l'autre pour les photons X ou gamma.

L'art antérieur dans ce domaine peut être illustré par exemple par les documents FR-A-2 317 668 ou DE-A-1 564 271. Dans ces deux documents il est question d'un appareillage qui utilise effectivement deux détecteurs l'un pour les neutrons et L'autre pour les photons, engendrant l'un et l'autre des photons visibles par scintillation, ces deux détecteurs étant associés à un même photomultiplicateur Tout le problème de cette détection sélective consiste par conséquent à mettre en oeuvre les moyens qui permettent, parmi les scintillations pris en compte par le photomultiplicateur, d'obtenir une sélection de celles qui sont dues aux neutrons et de celles qui sont dues aux photons X ou gamma. Dans l'art antérieur, la sélection des scintillations relatives respectivement à ces deux catégories de rayonnement est effectué à la sortie du scintillateur par un traitement du signal utilisant les caractéristiques particulières et distinctives de ces mêmes scintillations selon qu'elles sont dues aux neutrons ou aux photons. Pour l'essentiel, cette discrimination est réalisée soit sur le temps de montée des impulsions (dans le document FR-A-2 317 668), soit sur les différences de temps de décroissance des impulsions émises par les deux scintillateurs (cas du document DE-A-1 564 271). Dans un cas comme dans l'autre, cette phase de traitement du signal conduit à une électronique spectrométrique complexe et à un matériel coûteux.

Un autre document, "United States Statutory Invention Registration" n° H590, décrit un détecteur à scintillations, sensible à la fois aux neutrons et aux rayons gamma grâce à la présence de deux scintillateurs, l'un externe pour les neutrons thermiques et l'autre interne pour les neutrons rapides et les photons gamma. Toutefois, comme dans l'art antérieur précédent, la discrimination est faite dans la chaîne électronique de sortie par des mesures de forme des impulsions et comptage de celles-ci une par une après sélection donc par des appareillages complexes et coûteux. C'est pourquoi, dans ce détecteur, le scintillateur sensible aux photons gamma est un scintillateur en plastique, inapte, par nature, à délivrer des pics photoélectriques utilisables en spectrométrie.

La présente invention a précisément pour objet un procédé et un appareil de détection simultanée et sélective de neutrons et de photons X ou gamma permettant à l'aide de moyens dont la mise en oeuvre est simple, de séparer complètement les deux types de scintillation en utilisant une seule chaîne de mesure spectrométrique à deux canaux d'énergie dont chacun correspond à l'un des deux types de scintillation à séparer.

Le procédé de détection simultanée et sélective de neutrons et de photons X ou gamma à l'aide d'un détecteur comportant deux scintillateurs, l'un sensible aux neutrons et l'autre sensible aux photons X ou gamma, et associé à un appareil du genre photomultiplicateur, se caractérise en ce que les caractéristiques physiques des deux scintillateurs et/ou d'un éventuel convertisseur de longueur d'onde placé entre les scintillateurs et l'appareil photomultiplicateur, sont choisies pour que le pic des scintillations dues aux neutrons et le pic photoélectrique dû aux photons X ou gamma se situent dans des bandes de longueurs d'onde nettement séparées d'une part l'une de l'autre et, d'autre part du bruit de fond électronique de l'appareil.

Comme on le voit, l'invention porte donc essentiellement au stade du procédé sur les moyens de séparation en deux bandes de longueurs d'onde nettement distinctes des scintillations relatives à chacun des deux types de rayonnement étudiés. Le demandeur a ainsi mis en évidence que par un choix judicieux des matériaux scintillateurs et/ou l'emploi d'un éventuel convertisseur de longueurs d'onde, il était possible de localiser précisément et dans deux bandes d'énergie séparées l'une de l'autre et du bruit de fond, les scintillations dues aux photons et les scintillations dues aux neutrons.

En particulier, le scintillateur sensible aux photons doit être impérativement inorganique et monocristallin, car il doit être capable de délivrer un pic photoélectrique utilisable avec une chaîne spectrométrique, ainsi qu'on le précisera plus loin.

Selon les cas, cette séparation du pic des scintillations dues aux neutrons et du pic photoélectrique dû aux photons peut être obtenue simplement par le choix des scintillateurs en présence ; dans d'autres cas, le recours à un convertisseur de longueur d'onde est nécessaire. Dans cette dernière hypothèse, le convertisseur de longueur d'onde est accordé sur la bande des longueurs d'onde moyennes des scintillations lumineuses du scintillateur sensible aux photons pour la convertir en une bande similaire dans un domaine de longueur d'onde nettement séparé de la bande d'émission du scintillateur sensible aux neutrons et du bruit de fond électronique de l'appareil.

L'avantage considérable qui résulte de la mise en oeuvre du procédé, objet de l'invention, réside dans le fait que les deux canaux de scintillation étant identifiés et nettement séparés, la chaîne électronique de mesure peut être grandement simplifiée et réduite à un spectromètre à deux canaux constitué par un matériel électronique standard d'un coût peu élevé.

La présente invention a également pour objet un appareil de détection simultanée et sélective de neutrons et de photons X ou gamma, caractérisé en ce qu'il comporte :
- un détecteur proprement dit comprenant un scintillateur inorganique monocristallin sensible aux photons X ou gamma logé dans un fourreau extérieur en verre dopé au ⁶Li servant de scintillateur sensible aux neutrons et de protection, vis-à-vis de ces mêmes neutrons, du scintillateur X ou gamma ;
- un réflecteur lumineux de faible épaisseur, transparent aux neutrons et aux photons X ou gamma, recouvrant le scintillateur en verre dopé au 6 Li et dont la surface réfléchissante est tournée vers ce dernier ;
- une enceinte de confinement optique recouvrant le réflecteur lumineux et assurant l'étanchéité de l'ensemble du détecteur vis-à-vis de l'extérieur ;
- un dispositif photomultiplicateur situé à la sortie des deux scintillateurs et associé à ceux-ci au travers d'un coupleur optique ;
- une chaîne de mesure spectrométrique à deux canaux située à la sortie du dispositif photomultiplicateur et effectuant séparément dans chaque canal le comptage respectivement des scintillations dues aux neutrons et des scintillations dues aux photons X ou gamma.

Selon une caractéristique également importante de la présente invention, le scintillateur de photons X ou gamma inorganique et monocristallin utilise une matière scintillante choisie dans le groupe comprenant le germanate de bismuth (BGO), l'iodure de césium (CsI), le fluorure de césium (CsF), l'iodure de sodium (NaI) et l'orthosilicate de gadolinium (GSO).

Selon L'invention, les neutrons thermiques sont détectés par l'intermédiaire de la réaction (n, alpha) du lithium 6. La particule alpha et le triton issus de la réaction sont émis dans des directions opposées avec des énergies de 2,05 MeV et 2,74 MeV, respectivement. Du fait que le libre parcours moyen des neutrons thermiques est généralement de l'ordre du millimètre pour le verre, on peut obtenir des rendements de détection des neutrons très élevés avec des épaisseurs de verre relativement faibles. D'autre part, on obtient une très bonne protection du scintillateur X ou gamma grâce à l'absence de photons gamma de capture dans l'interaction neutrons/lithium 6.

Les photons X ou gamma sont détectés au moyen d'un scintillateur tel que mentionné ci-dessus dont les dimensions sont calculées en fonction des énergies des photons X ou gamma incidents et des coefficients massiques d'absorption du scintillateur afin d'obtenir le meilleur rendement possible.

Il est important de noter que le fourreau de verre dopé au lithium 6 qui sert de scintillateur pour la détection des neutrons thermiques a une double fonction en ce sens qu'il assure en même temps la protection du scintillateur interne de photons X ou gamma vis-à-vis des neutrons.

Selon une caractéristique facultative mais parfois également importante de l'invention, l'appareil de détection comporte entre les scintillateurs et le coupleur optique un convertisseur de longueur d'onde accordé sur la bande des scintillations dues aux photons X ou gamma et transférant cette bande dans un domaine de longueurs d'onde nettement séparé de la bande des scintillations dues aux neutrons ainsi que du bruit de fond, créant ainsi les deux canaux séparés dans lesquels travaille la chaîne de mesure spectrométrique.

Comme on l'a déjà expliqué précédemment, ce moyen de l'invention est facultatif et l'on y recourt pour assurer une bonne séparation des canaux de lecture entre eux et vis-à-vis du bruit de fond, seulement dans le cas où cette séparation n'est pas obtenue de façon satisfaisante par le choix approprié des matériaux scintillants et des caractéristiques physiques des deux scintillateurs.

Enfin, selon l'invention, l'appareil photomultiplicateur peut être soit un photomultiplicateur au sens habituel du terme, soit encore une photodiode.

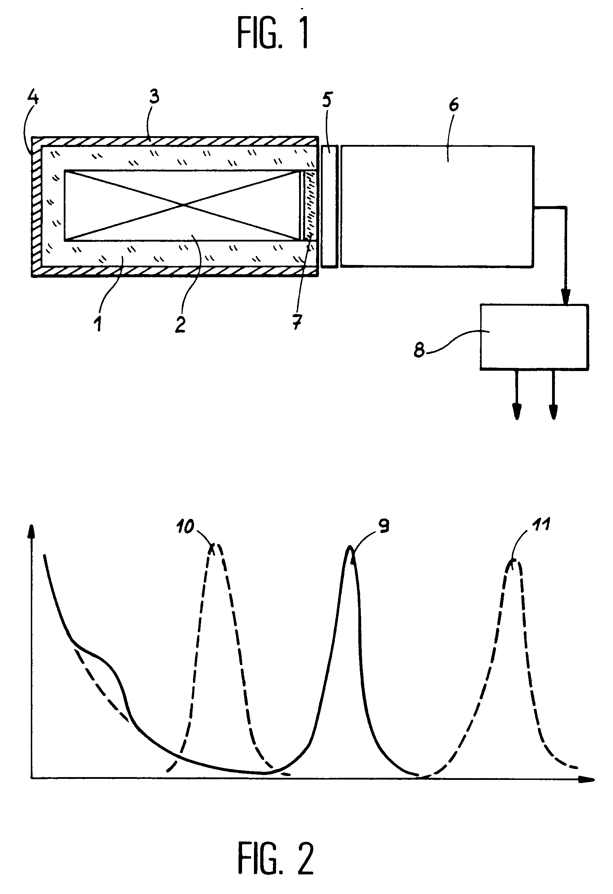

De toute façon, l'invention sera mieux comprise en se référant à la description qui suit d'un exemple de mise en oeuvre, exemple qui sera décrit à titre illustratif et non limitatif en se référant aux figures 1 et 2 sur lesquelles :
- la figure 1 est un schéma en coupe selon l'axe de l'appareil de détection, objet de l'invention ;
- la figure 2 est un dessin du spectre d'amplitude des scintillations dues aux neutrons et aux photons gamma montrant la disposition respective des différents pics.

Sur la figure 1 on a représenté en 1 le premier scintillateur en verre dopé au lithium 6 qui occupe sensiblement la forme d'un fourreau à l'intérieur duquel se trouve situé le deuxième scintillateur 2 spécialisé dans la détection des photons X ou gamma. Comme on l'a déjà indiqué, cette disposition particulière permet la protection du scintillateur 2 contre les neutrons en provenance de l'extérieur. L'ensemble des deux scintillateurs 1 et 2 est enfermé dans une enveloppe réflectrice 3 dont la partie réfléchissante est tournée vers les scintillateurs 1 et 2 de façon à éviter toute perte d'énergie lumineuse par fuite vers l'extérieur. Enfin, l'enveloppe réflectrice 3 est à son tour enfermée dans une enceinte 4 de confinement mécanique et optique qui assure l'étanchéité de l'ensemble vis-à-vis de l'extérieur.

Sur cette figure 1, on voit également un coupleur optique 5 qui assure la bonne transmission des scintillations lumineuses vers le photomultiplicateur 6.

Dans l'exemple décrit sur la figure 1, l'appareil de détection est complété par un convertisseur de longueur d'onde 7 ; ce convertisseur 7 comme on l'a expliqué précédemment, permet de réaliser une distribution des pics de scintillation dans des canaux d'énergie prévus à l'avance ainsi qu'on l'expliquera en se référant à la figure 2 suivante.

Enfin, à la sortie du photomultiplicateur 6 se trouve une chaîne de mesure spectrométrique 8 à deux canaux préréglés une fois pour toutes sur les deux bandes d'énergie ou de longueur d'onde dans lesquelles l'appareil restitue les informations de comptage des scintillations.

Bien entendu, la situation imbriquée des deux scintillateurs 1 et 2 sensibles respectivement aux neutrons et aux photons X et gamma implique que le matériau composant le scintillateur 2 puisse également servir de guide de lumière pour la transmission des informations lumineuses en provenance des scintillations qui interviennent dans le scintillateur 1.

Sur la figure 2, on a représenté les spectres d'amplitude des scintillations dues aux neutrons (en trait plein) et aux photons X et gamma (en trait pointillé). Le nombre d'impulsions comptées est représenté en ordonnée et l'énergie en abscisse.

Le spectre dû aux neutrons possède un pic 9 que l'on ne cherche pas à modifier. En revanche par un choix adéquat des matériaux scintillants d'une part et/ou le cas échéant d'un convertisseur de longueur d'onde d'autre part, on peut obtenir que le pic photoélectrique des scintillations dues aux photons X ou gamma soit situé, soit en 10, soit en 11, c'est-à-dire dans un canal d'énergie ou de longueur d'onde nettement différencié de celui du pic dû aux neutrons. Il est alors clair qu'il suffit d'une chaîne spectrométrique à deux canaux pour effectuer le comptage du nombre des scintillations dues à chaque type de rayonnement. De plus, ceci peut être réalisé à l'aide d'un matériel standard préréglé une fois pour toutes et beaucoup plus simple et moins coûteux que les dispositifs de traitement du signal qu'on utilisait dans l'art antérieur pour faire la sélection entre les deux origines des scintillations simultanées.

Un appareil de détection conforme à l'invention trouve un grand nombre d'applications possibles telles que par exemple les mesures simultanées qui font intervenir des interactions avec la matière, des neutrons et des photons dans le domaine industriel, géologique et minier (jauges de densité/humidité, grammage/humidité, épaisseur/humidité, diagraphies neutrons et/ou gamma), la surveillance des mouvements des assemblages de combustible irradié dans les usines de retraitement, la mesure du taux de combustion des assemblages irradiés et d'une manière générale toute mesure dans laquelle des neutrons et des photons sont associés avec un besoin de comptabilisation séparée.

## Revendications

1. Procédé de détection simultanée et sélective de neutrons et de photons X ou gamma à l'aide d'un détecteur comportant deux scintillateurs, l'un sensible aux neutrons et l'autre sensible aux photons X ou gamma, et associé à un appareil du genre photomultiplicateur (6), caractérisé en ce que le scintillateur sensible aux photons X ou gamma est de nature inorganique et monocristalline et en ce que les caractéristiques physiques des deux scintillateurs (1,2) et/ou d'un éventuel convertisseur (7) de longueur d'onde placé entre les scintillateurs et l'appareil photomultiplicateur, sont choisies pour que les scintillations dû aux neutrons et le pic photoélectrique des scintillations dues aux photons X ou gamma se situent dans des bandes de longueurs d'onde nettement séparées d'une part l'une de l'autre et, d'autre part du bruit de fond électronique de l'appareil.

2. Procédé de détection selon la revendication 1, caractérisé en ce que le convertisseur de longueur d'onde (7) est accordé sur la bande des longueurs d'onde moyennes des scintillations lumineuses du scintillateur sensible aux photons pour la convertir en une bande similaire dans un domaine de longueur d'onde nettement séparé de la bande d'émission du scintillateur sensible aux neutrons et du bruit de fond électronique de l'appareil.

3. Appareil de détection simultanée et sélective de neutrons et de photons X ou gamma selon le procédé des revendications 1 ou 2 précédentes, caractérisé en ce qu'il comporte :
- un détecteur proprement dit comprenant un scintillateur sensible aux photons X ou gamma (2), de nature inorganique et monocristalline, logé dans un fourreau extérieur en verre dopé au ⁶Li servant de scintillateur (1) sensible aux neutrons et de protection, vis-à-vis de ces mêmes neutrons, du scintillateur X ou gamma ;
- un réflecteur (3) lumineux de faible épaisseur, transparent aux neutrons et aux photons X ou gamma, recouvrant le scintillateur en verre dopé au ⁶Li et dont la surface réfléchissante est tournée vers ce dernier ;
- une enceinte de confinement optique (4) recouvrant le réflecteur lumineux et assurant l'étanchéité de l'ensemble du détecteur vis-à-vis de l'extérieur ;
- un dispositif photomultiplicateur (6) situé à la sortie des deux scintillateurs (1,2) et associé à ceux-ci au travers d'un coupleur optique (5) ;
- une chaîne de mesure spectrométrique (8) à deux canaux située à la sortie du dispositif photomultiplicateur (6) et effectuant séparément dans chaque canal le comptage respectivement des scintillations dues aux neutrons et des scintillations dues aux photons X ou gamma.

4. Appareil de détection selon la revendication 3, caractérisé en ce que le scintillateur de photons X ou gamma utilise une matière scintillante choisie dans le groupe comprenant le germanate de bismuth (BGO). L'iodure de césium (CsI), le fluorure de césium (CsF), l'iodure de sodium (NaI) et l'orthosilicate de gadolinium (GSO).

5. Appareil de détection selon l'une des revendications 3 et 4, caractérisé par la présence, entre les scintillateurs et le coupleur optique, d'un convertisseur de longueur d'onde (7), accordé sur la bande des scintillations dues aux photons X ou gamma et transférant cette bande dans un domaine de longueurs d'onde nettement séparé de la bande des scintillations dues aux neutrons ainsi que du bruit de fond, créant ainsi les deux canaux séparés dans lesquels travaille la chaîne de mesure spectrométrique.

6. Appareil de détection selon l'une quelconque des revendications 3 à 5, caractérisé en ce que l'appareil photomultiplicateur est une photodiode.

## Patentansprüche

1. Verfahren zur simultanen und selektiven Detektion von Neutronen und X- oder Gamma-Photonen mithilfe eines Detektors, welcher zwei Szintillatoren umfaßt, einen, der für Neutronen empfindlich ist und einen anderen, der für X- oder Gamma-Photonen empfindlich ist, und welcher mit einem Apparat von der Art eines Photomultiplikators (6) verbunden ist,
**dadurch gekennzeichnet,**
daß der für X- oder Gamma-Photonen empfindliche Szintillator von anorganischer und monokristalliner Natur ist und daß die physikalischen Kennzeichen der beiden Szintillatoren (1,2) und/oder eines eventuellen Wellenlängen-Konverters (7), der zwischen den Szintillatoren und dem Photomultiplikatorapparat angeordnet ist, so gewählt werden, daß die Szintillationen aufgrund der Neutronen und der photoelektrische Peak aufgrund der X- oder Gamma-Photonen sich in Wellenlängenbereichen befinden, die genau voneinander sowie von dem elektronischen Grundrauschen des Apparats getrennt sind.

2. Verfahren zur Detektion gemäß Anspruch 1, dadurch gekennzeichnet, daß der Wellenlängen-Konverter (7) auf das mittlere Wellenlängenband der Lichtszintillationen des für Photonen empfindlichen Szintillators abgestimmt ist, um sie in ein ähnliches Band in einen Wellenlängenbereich zu konvertieren, der genau von dem Emissionsband des für Neutronen empfindlichen Szintillators und dem elektronischen Grundrauschen des Apparats getrennt ist.

3. Apparat zur simultanen und selektiven Detektion von Neutronen und X- oder Gamma-Photonen gemäß dem Verfahren der Ansprüche 1 oder 2, dadurch gekennzeichnet, daß er:
- einen Detektor umfaßt, genau gesagt einen für X- oder Gamma-Photonen empfindlichen Szintillator (2) umfaßt, von anorganischer und monokristalliner Natur, der in einer äußeren Hülse aus mit ⁶Li dotiertem Glas angebracht ist, was dem für Neutronen empfindlichen Szintillator (1) dient und zum Schutz des X- oder Gamma-Szintillators gegen eben diese Neutronen;
- einen Licht-Reflektor (3) geringer Dicke umfaßt, der für Neutronen und X- oder Gamma-Photonen durchlässig ist, der den Szintillator aus mit ⁶Li dotiertem Glas bedeckt und dessen reflektierende Oberfläche gegen diesen letzteren gerichtet ist;
- eine Kammer zum optischen Einschluß (4) umfaßt, welche den Lichtreflektor bedeckt und die Dichtigkeit der Detektoreinheit gegenüber dem Äußeren sichert;
- eine Photomultiplikatorvorrichtung (6) umfaßt, die am Ausgang der beiden Szintillatoren (1,2) angeordnet ist und mit diesen durch einen optischen Koppler (5) verbunden ist;
- eine spektrometrische Meßkette (8) mit zwei Kanälen umfaßt, die am Ausgang der Photomultiplikatorvorrichtung (6) angebracht ist und welche getrennt in jedem Kanal die entsprechende Zählung der Szintillationen aufgrund der Neutronen und die Szintillationen aufgrund von X- oder Gamma-Photonen ausführt.

4. Detektionsapparat gemäß Anspruch 3, dadurch gekennzeichnet, daß der Szintillator von X- oder Gamma-Photonen ein szintillierendes Material verwendet, welches aus der Gruppe gewählt wird, die Bismutgermanat (BGO), Cäsiumiodid (CsI), Cäsiumfluorid (CsF), Natriumiodid (NAI) und Gadoliniumorthosilikat (GSO) umfaßt.

5. Detektionsapparat gemäß einem der Ansprüche 3 und 4, gekennzeichnet durch die Anwesenheit eines Wellenlängenkonverters (7) zwischen den Szintillatoren und dem optischen Koppler, welcher auf das Szintillationsband aufgrund der X- oder Gamma-Photonen abgestimmt ist und dieses Band in einen Wellenlängenbereich umwandelt, der genau von dem Szintillationsband aufgrund von Neutronen sowie dem Grundrauschen getrennt ist, wodurch also die beiden getrennten Kanäle erzeugt werden, in denen die spektrometrische Meßkette arbeitet.

6. Detektionsapparat gemäß einem der Ansprüche 3 bis 5, dadurch gekennzeichnet, daß der Photomultiplikatorapparat eine Photodiode ist.

## Claims

1. Process for the simultaneous selective detection of neutrons and X or gamma photons with the aid of a detector having two scintillators, one sensitive to the neutrons and the other sensitive to the X or gamma photons, and canbined with a photomultiplier-type apparatus (6), characterized in that the scintillator sensitive to the X or gamma photons is of an inorganic, monocrystalline nature and in that the physical characteristics of the two scintillators (1, 2) and/or a possible wavelength converter (7) placed between the scintillators and the photomultiplier apparatus, are chosen in such a way that the scintillations due to the neutrons and the photoelectric peak of the scintillatios due to the X or gamma photons are in wavelength bands which are clearly separated from one another and from the electronic background noise of the apparatus.

2. Detection process according to claim 1, characterized in that the wavelength converter (7) is tuned to the medium wavelength range of the light scintillations of the scintillator sensitive to the photons in order to convert it into a similar band in a wavelength range clearly separated from the emission band of the scintillator sensitive to the neutrons and the electronic background noise of the apparatus.

3. Apparatus for the simultaneaus selective detection of neutrons and X or gamma photons according to the process of claims 1 or 2, characterized in that it incorporates a detector having a monocrystalline, inorganic scintillator sensitive to the gamma or X photons (2) located in an external ⁶Li doped glass sleeve serving as a scintillator (1) sensitive to the neutrons and providing a protection against said neutrons, from the X or gamma scintillator, a light reflector (3) of limited thickness transparent to the neutrons and to the X or gamma photons, covering the ⁶Li doped glass scintillator and whose reflecting surface is turned towards the latter, an optical confinement enclosure (4) covering the light reflector and ensuring the sealing of the assembly of the detector with respect to the exterior, a photomultiplier means (6) located at the output of the two scintillators (1, 2) and associated with the latter across an optical coupler (5) and a dual channel spectrometric measuring system (8) located at the output of the photomultiplier means (6) and separately forming in each channel the counting respectively of the scintillations due to the neutrons and the scintillations due to the X or gamma photons.

4. Detection apparatus according to claim 3, characterized in that the X or gamma photon scintillator uses a scintillating material chosen from within the group including bismuth germanate (BGO), cesium iodide (CsI), cesium fluoride (CsF), sodium iodide (NaI) and gadolinium orthosilicate (GSO).

5. Detection apparatus according to either of the claims 3 and 4, characterized by the presence, between the scintillators and the optical coupler, of a wavelength converter (7) tuned to the band of the scintillations due to the X or gamma photons and transferring said band into a wavelength range clearly separate from the band of the scintillations due to the neutrons, as well as the background noise, thus creating two separate channels in which the spectrometric measuring system operates.

6. Detection apparatus according to any one of the claims 3 to 5, characterized in that the photomultiplier apparatus is a photodiode.
